# EUROPÄISCHE PATENTSCHRIFT

(11) **EP 3 576 004 B1**
(45) Veröffentlichungstag und Bekanntmachung des Hinweises auf die Patenterteilung: **20.03.2024**
(21) Anmeldenummer: 18175007.6
(22) Anmeldetag: 30.05.2018
(51) Int. Cl.: G06F 21/86, G06Q 20/20, H04L 9/40, G06Q 40/12, G07G 1/00

(54) **ANORDNUNG ZUM GESICHERTEN DRUCKEN VON FISKALDATEN**
ARRANGEMENT FOR SECURE PRINTING OF FISCAL DATA
AGENCEMENT POUR L'IMPRESSION SECURISÉE DE DONNÉES FISCALES

(43) Veröffentlichungstag der Anmeldung: 04.12.2019
(73) Patentinhaber: Diebold Nixdorf Systems GmbH, 33106 Paderborn (DE)
(72) Erfinder: Duchstein, Mirko, 13589 Berlin (DE); Schulz, Stefan, 13187 Berlin (DE)

(56) Entgegenhaltungen:
- EP-A1- 2 800 073
- EP-A2- 2 824 605
- DE-A1- 10 255 053
- GB-A- 2 297 414
- US-A1- 2010 134 821

## Beschreibung

Die Erfindung betrifft eine Anordnung zum gesicherten Drucken von Fiskaldaten, die eine Druckeinheit, die in einem ersten Gehäuse angeordnet ist, und ein, einen nicht flüchtigen Speicher umfassendes Fiskaldatenspeichermodul umfasst.

Aus dem Stand der Technik sind Druckeinheiten zum Drucken von Kaufbelegen bekannt, die ein Fiskaldatenspeichermodul zum sicheren Speichern von Fiskaldaten umfassen. Aus dem Dokument DE 10 2011 050 174 A1 ist beispielsweise eine Datenspeichervorrichtung zum Speichern von Fiskaldaten bekannt, die in einer Druckeinheit integriert angeordnet ist. Die Datenspeichervorrichtung ist in einer ausgehärteten Vergussmasse eingebettet, die an einer Wandung der Druckeinheit so angeformt ist, dass die Datenspeichervorrichtung nicht ohne Zerstörung von der Wandung der Druckeinheit getrennt werden kann. Aus dem Dokument US 2010/134821 A1 ist ein Fiskaldrucker bekannt, bei dem ein Fiskalspeicher in einem Kunststoffspritzguss eingegossen und auf einer Fiskal-Leiterplatte angeordnet ist. Ein Detektionsschaltkreis detektiert das Datum und die Uhrzeit, an denen die Fiskal-Leiterplatte aus dem Fiskaldrucker entfernt wird. Aus dem Dokument DE 102 55 053 A1 ist ein Belegdrucker bekannt, der über eine Schnittstelle auszudruckende Daten empfängt und daraufhin eine kryptographische Signatur dieser Daten zurücksendet.

Die Anforderungen, die an Fiskaldatenspeichermodule gestellt werden, sind abhängig von länderspezifischen Vorgaben, die laufenden Veränderungen unterliegen. Ferner müssen von den Fiskaldatenspeichermodulen verschiedene Arten und Anzahlen von Peripheriegeräten angesteuert werden. Die aus dem Stand der Technik bekannte Integration der Fiskaldatenspeichermodule in Druckeinheiten hat jedoch große, aufwendig abgesicherte Gehäuse zur Folge, die sich nur schwer in Anwendungsumgebungen integrieren lassen. Ferner ist der Zugang zu den Fiskaldatenspeichermodulen erschwert, sodass ein einfacher Austausch und/oder eine einfache Wartung nicht möglich sind.

Es ist Aufgabe der Erfindung eine flexible und kostengünstige Anordnung anzugeben, in der ein Fiskaldatenspeichermodul und eine Druckeinheit sicher miteinander verbunden sind.

Diese Aufgabe wird durch eine Anordnung mit den Merkmalen des Anspruchs 1 angegeben. Vorteilhafte Weiterbildungen sind in den abhängigen Ansprüchen angegeben.

Bei der Anordnung zum gesicherten Drucken von Fiskaldaten mit den Merkmalen des Anspruchs 1 ist das Fiskaldatenspeichermodul in einem gegen Manipulation und Eingriff gesicherten, von dem ersten Gehäuse verschiedenen zweiten Gehäuse angeordnet. Die Druckeinheit umfasst ein Sicherheitsmodul, wobei das Sicherheitsmodul und das Fiskaldatenspeichermodul über eine gesicherte Datenübertragungsverbindung miteinander verbunden sind. Dadurch wird eine flexible, platzsparende Anordnung erreicht, mit der die Anforderungen der Finanzbehörden einfach erfüllt werden können. Dadurch, dass das Sicherheitsmodul und das Fiskaldatenspeichermodul in getrennten Gehäusen angeordnet sind, können insbesondere eine Wartung, eine Nachrüstung oder ein Austausch des Fiskaldatenspeichermoduls unabhängig von der Druckeinheit erfolgen. Dies wirkt sich besonders vorteilhaft auf die Wirtschaftlichkeit der Anordnung aus.

Besonders voreilhaft ist es, wenn das Sicherheitsmodul in einem dritten, gegen Manipulation und Eingriff gesicherten Gehäuse angeordnet ist, das vorzugsweise in dem ersten Gehäuse angeordnet ist. Dadurch wird eine Anordnung erreicht, die besonders hohe Sicherheitsanforderungen erfüllt.

Ferner ist es vorteilhaft, wenn über die Datenübertragungsverbindung Daten zwischen dem Fiskaldatenspeichermodul und dem Sicherheitsmodul gesichert übertragen werden, wobei die sichere Datenübertragung insbesondere mit Hilfe eines unidirektionalen Softwarekeymanagements, insbesondere auf Basis von HTTPS, SSL oder TLS, erfolgt. Dadurch wird einer Manipulation der Druckdaten durch unbefugte Dritte, insbesondere zum Zweck des Steuerbetrugs, entgegengewirkt.

Es ist besonders vorteilhaft, wenn die Druckeinheit nur über die Datenübertragungsverbindung ansteuerbar ist, und wenn die Druckdaten nur über die Datenübertragungsverbindung zur Druckeinheit übertragbar sind. Dadurch wird sichergestellt, dass nur solche Druckdaten gedruckt werden, die von dem Fiskaldatenspeichermodul erfasst worden sind.

Ferner ist es vorteilhaft, wenn das Sicherheitsmodul Daten über die Datenübertragungsverbindung an das Fiskaldatenspeichermodul überträgt, wobei durch diese Daten von der Druckeinheit bestätigt wird, dass alle Druckdaten von der Druckeinheit korrekt verarbeitet worden sind. Dadurch wird sichergestellt, dass Fehlerzustände der Druckeinheit von dem Fiskaldatenspeichermodul unmittelbar erfasst werden.

Bei besonders vorteilhaften Ausführungsformen werden gerasterte Bilddaten oder Druckdaten in einer Seitenbeschreibungssprache, insbesondere PCL oder Postscript, von dem Sicherheitsmodul der Druckeinheit an die Fiskaldatenspeichereinheit übertragen. Dadurch wird eine besonders zuverlässige und effiziente Belegprüfung, insbesondere im Rahmen von Außenprüfungen durch die Finanzbehörden, ermöglicht. Auch ist eine einfache Archivierung der tatsächlich gedruckten Druckdaten möglich.

Ferner ist es vorteilhaft, wenn die gesicherte Datenübertragungsverbindung über ein Signal-/ und/oder über ein Netzwerkkabel erfolgt. Das Signalkabel kann insbesondere ein Kabel zur seriellen Datenübertragung, wie ein USB-Kabel oder ein RS-232 oder ein RS-485 Kabel sein. Dadurch wird eine sichere und stabile Datenverbindung zwischen dem Fiskaldatenspeichermodul und der Druckeinheit erreicht.

Besonders vorteilhaft ist es, wenn die gesicherte Datenübertragungsverbindung alternativ oder zusätzlich über eine drahtlose Datenübertragung, insbesondere über WLAN, UMTS oder GSM, erfolgt. Dadurch wird eine besonders flexible Anordnung erreicht, die sich gut in die Anwendungsumgebung integrieren lässt.

Es ist vorteilhaft, wenn das Sicherheitsmodul, das Fiskaldatenspeichermodul und die Datenübertragungsverbindung eine sichere Fiskalspeichereinheit bilden. Besonders vorteilhaft ist es, wenn die Fiskalspeichereinheit gespeicherte Fiskaldaten sicher an Dritte, insbesondere an Finanzbehörden, übermittelt, wobei die Übertragung der Fiskaldaten insbesondere drahtlos über ein Funknetz, insbesondere über WLAN, UMTS oder GSM, erfolgt. Dadurch wird sichergestellt, dass den Finanzbehörden einfach korrekte Fiskaldaten zu Prüfungszwecken bereitgestellt werden.

Ferner ist es vorteilhaft, wenn das Fiskaldatenspeichermodul Peripheriegeräte, insbesondere mindestens eine Anzeigeeinheit und/oder mindestens eine Kassenschublade und/oder mindestens einen Scanner und/oder mindestens eine Waage ansteuert. Dadurch wird eine besonders sichere, gegen Manipulation geschützte Steuerung der Peripheriegeräte durch die erfindungsgemäße Anordnung erreicht.

In einer vorteilhaften Ausführungsform umfasst das zweite Gehäuse eine Sensoreinheit zur Detektion von Manipulationen. Besonders vorteilhaft ist es, wenn die Sensoreinheit ein Geflecht oder eine Folie aus elektrisch leitfähigem Material umfasst, wobei die Öffnungen des Geflechts vorzugsweise geringer als 1 mm, insbesondere zwischen 0,1 mm und 0,9 mm sind. Dadurch wird sichergestellt, dass mechanische Manipulationsversuche an dem Fiskaldatenspeichermodul unmittelbar erkannt werden.

Besonders vorteilhaft ist es, wenn eine Steuereinheit vorgesehen ist, die die Signale der Sensoreinheit derart auswertet, dass bei einer durch die Sensoreinheit detektierten Manipulation ein Fehlerzustand der Anordnung ermittelt und eine Fehlermeldung erzeugt wird oder dass die Anordnung bei einer durch die Sensoreinheit detektierten Manipulation außer Betrieb gesetzt wird. Dadurch wird eine besonders sichere, gegen Eingriff und Manipulation geschützte Anordnung erreicht.

Ferner ist es besonders vorteilhaft, wenn das zweite Gehäuse und/oder das erste Gehäuse und/oder das dritte Gehäuse wasser- und/oder staubdicht ist. Dadurch können insbesondere länderspezifische Anforderungen berücksichtigt werden.

Weitere Merkmale und Vorteile der Erfindung ergeben sich aus der folgenden Beschreibung, welche in Verbindung mit den beigefügten Figuren die Erfindung anhand von Ausführungsbeispielen näher erläutert.

Es zeigt:
- Fig. 1: eine erfindungsgemäße Anordnung zum gesicherten Drucken von Fiskaldaten mit einer Druckeinheit und einem Fiskaldatenspeichermodul,
- Fig. 2a: eine Untersicht des Fiskaldatenspeichermoduls nach Figur 1,
- Fig. 2b: eine Rückansicht des Fiskaldatenspeichermoduls nach den Figuren 1 und 2a,
- Fig. 2c: eine Seitensicht des Fiskaldatenspeichermoduls nach den Figuren 1 bis 2b,
- Fig. 2d: eine Vorderansicht des Fiskaldatenspeichermoduls nach den Figuren 1 bis 2c,
- Fig. 2e: eine Draufsicht des Fiskaldatenspeichermoduls nach den Figuren 1 bis 2d, und
- Fig. 3: eine schematische Darstellung von Funktionsein-heiten der Anordnung und weiterer, mit der Anord-nung verbundener Einheiten.

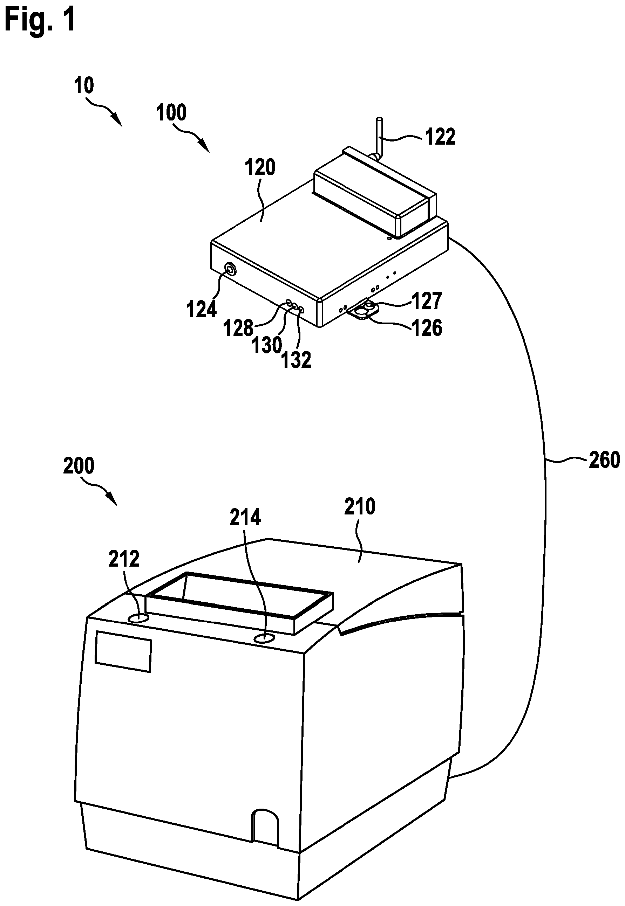

Figur 1 zeigt eine erfindungsgemäße Anordnung 10 zum gesicherten Drucken von Fiskaldaten, die ein Fiskaldatenspeichermodul 100 und eine Druckeinheit 200 umfasst. Das Fiskaldatenspeichermodul 100 und die Druckeinheit 200 sind über ein Netzwerkkabel 260 miteinander verbunden. Die Druckeinheit 200 umfasst ein erstes Gehäuse 210 und einen Schalter 212 zum Ein-und Ausschalten der Druckeinheit 200, sowie eine Entriegelungstaste 214 zum Öffnen der Druckeinheit 200. Im Gehäuse 210 der Druckeinheit 200 ist ein in Figur 1 nicht sichtbares Sicherheitsmodul angeordnet.

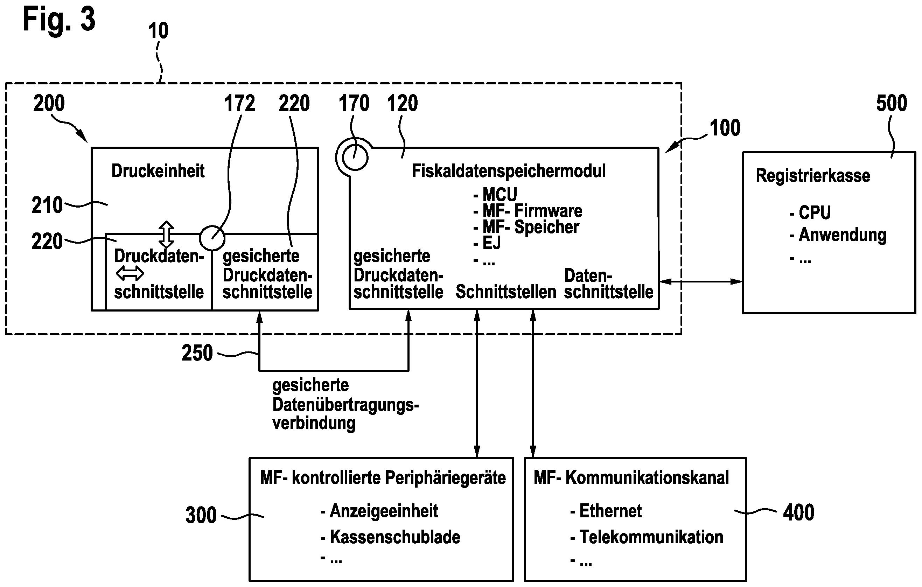

Über das Netzwerkkabel 260 erfolgt eine gesicherte Datenübertragungsverbindung zwischen dem Sicherheitsmodul der Druckeinheit 200 und dem Fiskaldatenspeichermodul 100. Die gesicherte Datenübertragungsverbindung wird in Zusammenhang mit Figur 3 näher erläutert. Bei alternativen Ausführungsformen kann die gesicherte Datenübertragungsverbindung über eine drahtlose Datenübertragungsverbindung, insbesondere über WLAN, UMTS oder GSM, erfolgen.

Das Fiskaldatenspeichermodul 100 umfasst einen nicht flüchtigen Speicher und hat ein, von dem Gehäuse 210 der Druckeinheit 200 verschiedenes zweites Gehäuse 120. Das Gehäuse 120 ist insbesondere wasser- und staubdicht und entspricht vorzugsweise der Gehäuseschutzart IP54 oder höher. Im Inneren des Gehäuses 120 ist insbesondere eine Sensoreinheit zur Detektion von Manipulationen, wobei die Sensoreinheit ein Geflecht oder eine Folie, vorzugsweise eine Meshfolie, aus elektrisch leitfähigem Material umfasst, die auf der Innenseite des Gehäuses 120 angeordnet ist oder in die Wandung des Gehäuses 120 integriert ist. Die Öffnungen des Geflechts sind vorzugsweise geringer als 1 mm, insbesondere zwischen 0,1 mm und 0,9 mm. Eine nicht dargestellte Steuereinheit wertet die Signale der Sensoreinheit derart aus, dass bei einer durch die Sensoreinheit detektierten Manipulation ein Fehlerzustand der Anordnung 10 ermittelt und eine Fehlermeldung erzeugt wird oder dass die Anordnung 10 bei einer durch die Sensoreinheit detektierten Manipulation außer Betrieb gesetzt wird.

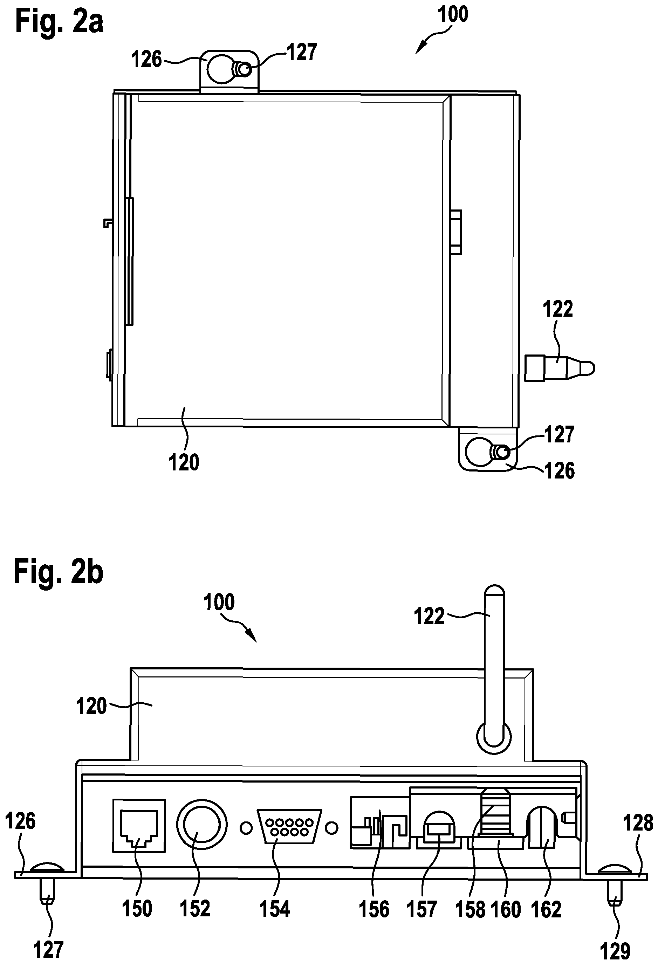

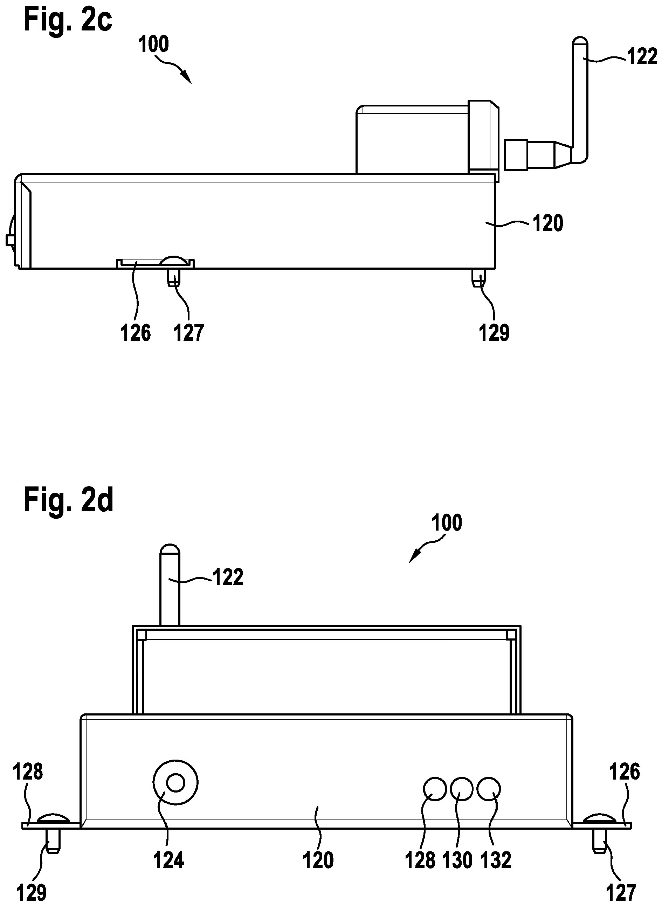

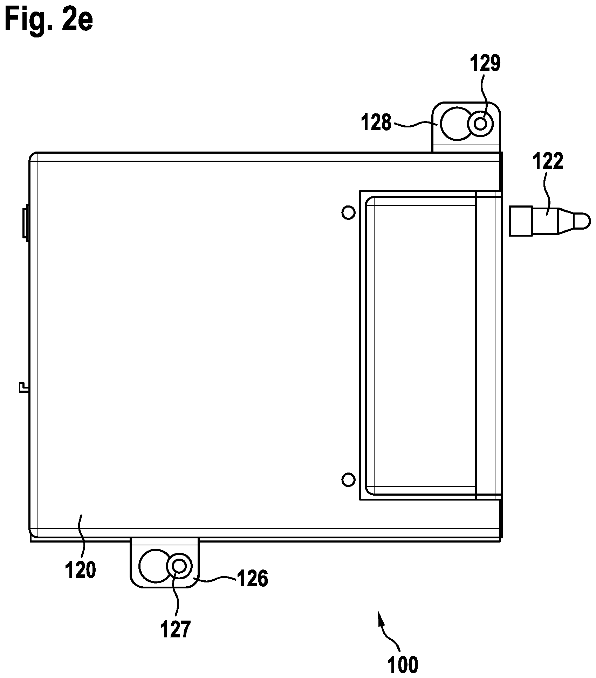

Das Fiskaldatenspeichermodul 100 umfasst ferner einen Schalter 124 zum Ein- und Ausschalten des Fiskaldatenspeichermoduls 100 und drei Leuchtdioden 128 bis 132 zur Anzeige von Betriebszuständen des Fiskaldatenspeichermoduls 100. Ferner umfasst das Fiskaldatenspeichermodul 100 ein erstes Befestigungselement 126 und ein zweites Befestigungselement, durch die jeweils eine Schraube 127 geführt ist. In der Darstellung nach Figur 1 sind das erstes Befestigungselement 126 und die Schraube 127 sichtbar, während das zweite Befestigungselement 128 und die Schraube 129 in den Darstellungen nach den Figuren 2a, 2b, 2d und 2e sichtbar sind. Die Befestigungselemente 126, 128 sind zum sicheren Verbinden des Fiskaldatenspeichermoduls 100 mit einer Oberfläche, wie beispielsweise einem Kassentisch, vorgesehen.

Ferner umfasst das Fiskaldatenspeichermodul 100 eine Sende- und Empfangseinheit mit einer Antenne 122 zur Übermittlung von Fiskaldaten über Funk, insbesondere über 3G- oder 4G-Mobilfunkstandard oder WLAN. Die vom Fiskaldatenspeichermodul 100 erfassten und/oder gespeicherten Fiskaldaten können mit Hilfe der Sende- und Empfangseinheit insbesondere an Finanzbehörden übermittelt werden.

Figur 2a zeigt eine Untersicht, Figur 2b eine Rückansicht, Figur 2c eine Seitenansicht, Figur 2d eine Vorderansicht und Figur 2e eine Draufsicht des Fiskaldatenspeichermoduls 100 nach Figur 1. Elemente mit gleichem Aufbau oder gleicher Funktion haben dieselben Bezugszeichen. Wie in Figur 2b gezeigt, hat das Fiskaldatenspeichermodul 100 einen RJ45-Steckverbinder zum Anschluss eines Netzwerkkabels, eine P2/2 Schnittstelle 152 zum Anschluss einer Tastatur oder einer anderen Eingabeeinheit, einen Sub-D9 Einbaustecker 154, einen Steckplatz für ein Netzwerkmodul 156, sowie vier USB-Anschlüsse 157 bis 162 zum Anschluss weiterer Peripheriegeräte.

Figur 3 ist eine schematische Darstellung von Funktionseinheiten der Anordnung 10 und weiterer, mit der Anordnung 10 verbundener Einheiten. Das Fiskaldatenspeichermodul 100 umfasst das Gehäuse 120, welches insbesondere mit einem Siegel 170 versiegelt ist. Das Fiskaldatenspeichermodul 100, das in der Darstellung nach Figur 3 mit MF abgekürzt ist, umfasst eine MF-Steuereinheit, insbesondere eine Mikrocontroller MCU, sowie MF-Firmware und einen MF-Speicher. Das Fiskaldatenspeichermodul 100 umfasst ferner eine Datenschnittstelle, über die Daten mit einer Registrierkasse 500 ausgetauscht werden. Die Registrierkasse 500 umfasst insbesondere eine zentrale Steuereinheit und verschiedene Software-Anwendungen. Das MF-Modul umfasst ein elektronisches Journal EJ, in welchem alle Registriervorgänge gespeichert werden, diese können beispielsweise durch Ausdruck sichtbar gemacht werden.

Ferner umfasst das Fiskaldatenspeichermodul 100 eine erste gesicherte Druckdatenschnittstelle, die über die gesicherte Datenübertragungsverbindung 250 mit einer zweiten, im Inneren der Druckeinheit 200 angeordneten, gesicherten Druckdatenschnittstelle verbunden ist. Die zweite gesicherte Druckdatenschnittstelle ist Teil des Sicherheitsmoduls des Druckers 200. Das Sicherheitsmodul ist in einem dritten, mit einem Siegel 172 versiegelten Gehäuse 220, vorzugsweise im Inneren des zweites Gehäuses 210, angeordnet. Das Gehäuse 220 ist insbesondere wasser- und staubdicht und entspricht vorzugsweise der Gehäuseschutzart IP54 oder höher.

Über die Datenübertragungsverbindung 250 werden Daten zwischen dem in der Druckeinheit 200 angeordneten Sicherheitsmodul im Drucker 200 und dem Fiskaldatenspeichermodul 100 gesichert übertragen. Die sichere Datenübertragung erfolgt insbesondere mit Hilfe eines unidirektionalen Softwarekeymanagements auf Basis von HTTPS, SSL oder TLS. Die Daten werden mittels eines Druckerhersteller-spezifischen Datenformats mittels ESC-Sequenzen, beispielsweise ESC POS-Epson, oder mittels einer standardisierten Seitenbeschreibungssprache von dem Fiskaldatenspeichermodul 100 an das Sicherheitsmodul der Druckeinheit 200 übertragen. Die Druckeinheit 200 ist nur über die Datenübertragungsverbindung 250 ansteuerbar. Druckdaten sind insbesondere nur über die Datenübertragungsverbindung 250 zur Druckeinheit 200 übertragbar. Zur internen Weiterverarbeitung der Druckdaten umfasst die Druckeinheit 200 weiterhin eine interne Druckdatenschnittstelle.

Über die Datenübertragungsverbindung 250 kann ferner eine Übertragung von Daten von der Druckeinheit 200 zum Fiskaldatenspeichermodul 100 erfolgen. Durch diese Daten kann von der Druckeinheit 200 bestätigt werden, dass alle Druckdaten von der Druckeinheit 200 korrekt verarbeitet worden sind. Bei besonders bevorzugten Ausführungsformen können Bilddaten eines Druckbilds einer gedruckten Rechnung von der Druckeinheit 200 zu dem Fiskaldatenspeichermodul 100 übertragen werden, wobei insbesondere gerasterte Bilddaten oder Druckdaten in der Seitenbeschreibungsseite, vorzugsweise PCL oder Postscript, über die gesicherte Datenübertragungsverbindung 250 übermittelt werden.

Ferner umfasst das Fiskaldatenspeichermodul 100 die in Zusammenhang mit Figur 2b beschriebenen Anschlüsse 150 bis 162, die als Schnittstellen für Peripheriegeräte 300 und als Kommunikationskanäle 400 dienen können. Über die Anschlüsse 150 bis 162 können beispielsweise durch das Fiskaldatenspeichermodul 100 gesteuerte Peripheriegeräte 300, wie Anzeigeeinheiten und/oder Kassenschubladen und/oder Waagen und/oder Scanner eines Kassensystems mit dem Fiskaldatenspeichermodul 100 verbunden werden, sodass eine Ansteuerung dieser Peripheriegeräte 300 durch das Fiskaldatenspeichermodul möglich ist. Ferner kann eine Übermittlung von Fiskaldaten an Finanzbehörden über einen MF-Kommunikationskanal 400, insbesondere über eine Ethernetverbindung und/oder eine Verbindung über ein Telekommunikationsnetz, erfolgen.

### Bezugszeichenliste

- 10: Anordnung
- 100: Fiskaldatenspeichermodul
- 120, 210, 220: Gehäuse
- 122: Antenne
- 124, 212: Schalter
- 126, 128: Befestigungselement
- 127, 129: Schraube
- 128 bis 132: Leuchtdiode
- 150: RJ45-Steckverbinder
- 152: P2/2-Schnittstelle
- 154: D-Sub-Einbaustecker
- 156: Steckplatz für Netzwerkmodul
- 157 bis 162: USB-Anschluss
- 170, 172: Siegel
- 200: Druckeinheit
- 250: gesicherte Datenübertragungsverbindung
- 260: Netzwerkkabel
- 214: Entriegelungstaste
- 300: Peripheriegerät
- 400: Kommunikationskanal
- 500: Registrierkasse

- EJ: Elektronisches Journal
- MCU: Mikrocontroller

## Patentansprüche

1. Anordnung zum gesicherten Drucken von Fiskaldaten,
mit einer Druckeinheit (200), die in einem ersten Gehäuse (210) angeordnet ist,
mit einem, einen nicht flüchtigen Speicher umfassenden Fiskaldatenspeichermodul (100),
wobei die Druckeinheit (200) ein Sicherheitsmodul umfasst,
wobei das Sicherheitsmodul und das Fiskaldatenspeichermodul (100) über eine gesicherte Datenübertragungsverbindung (250) miteinander verbunden sind,
**dadurch gekennzeichnet,**
**dass** das Fiskaldatenspeichermodul (100) in einem gegen Manipulation und Eingriff gesicherten, von dem ersten Gehäuse verschiedenen zweiten Gehäuse (120) angeordnet ist,
**dass** das zweite Gehäuse (120) eine Sensoreinheit zur Detektion von Manipulationen umfasst, und
**dass** das Fiskaldatenspeichermodul (100) eine Schnittstelle umfasst, über die Daten mit einer Registrierkasse (500) austauschbar sind.

2. Anordnung nach Anspruch 1, **dadurch gekennzeichnet,**
**dass** das Sicherheitsmodul in einem dritten, gegen Manipulation und Eingriff gesicherten Gehäuse (220) angeordnet ist, das vorzugsweise in dem ersten Gehäuse (210) angeordnet ist.

3. Anordnung nach einem der vorhergehenden Ansprüche,
**dadurch gekennzeichnet, dass** über die Datenübertragungsverbindung (250) Daten zwischen dem Fiskaldatenspeichermodul (100) und dem Sicherheitsmodul gesichert übertragen werden, wobei die sichere Datenübertragung insbesondere mit Hilfe eines unidirektionalen Softwarekeymanagements, insbesondere auf Basis von HTTPS, SSL oder TLS, erfolgt.

4. Anordnung nach einem der vorhergehenden Ansprüche,
**dadurch gekennzeichnet, dass** die Druckeinheit (200) nur über die Datenübertragungsverbindung (250) ansteuerbar ist, und dass die Druckdaten nur über die Datenübertragungsverbindung (250) zur Druckeinheit (200) übertragbar sind.

5. Anordnung nach einem der vorhergehenden Ansprüche,
**dadurch gekennzeichnet, dass** das Sicherheitsmodul Daten über die Datenübertragungsverbindung (250) an das Fiskaldatenspeichermodul (100) überträgt, wobei durch diese Daten von der Druckeinheit (200) bestätigt wird, dass alle Druckdaten von der Druckeinheit (200) korrekt verarbeitet worden sind.

6. Anordnung nach einem der vorhergehenden Ansprüche,
**dadurch gekennzeichnet, dass** gerasterte Bilddaten oder Druckdaten in einer Seitenbeschreibungssprache, insbesondere PCL oder Postscript, von dem Sicherheitsmodul an die Fiskaldatenspeichereinheit (100) übertragen werden.

7. Anordnung nach einem der vorhergehenden Ansprüche,
**dadurch gekennzeichnet, dass** die gesicherte Datenübertragungsverbindung (250) über ein Signal-/ und/oder über ein Netzwerkkabel (260) erfolgt, wobei das Signalkabel vorzugsweise ein Kabel zur seriellen Datenübertragung, wie ein USB-Kabel oder ein RS-232 oder ein RS-485 Kabel ist.

8. Anordnung nach den Ansprüchen 1 bis 6, **dadurch gekennzeichnet, dass** die gesicherte Datenübertragungsverbindung (250) über eine drahtlose Datenübertragung, insbesondere über WLAN, UMTS oder GSM, erfolgt.

9. Anordnung nach einem der vorhergehenden Ansprüche,
**dadurch gekennzeichnet, dass** das Sicherheitsmodul, das Fiskaldatenspeichermodul (100) und die Datenübertragungsverbindung (250) eine sichere Fiskalspeichereinheit bilden.

10. Anordnung nach Anspruch 9, **dadurch gekennzeichnet,**
**dass** die Fiskalspeichereinheit gespeicherte Fiskaldaten sicher an Dritte, insbesondere an Finanzbehörden übermittelt, wobei die Übertragung der Fiskaldaten insbesondere drahtlos über ein Funknetz, insbesondere über WLAN, UMTS oder GSM, erfolgt.

11. Anordnung nach einem der vorhergehenden Ansprüche,
**dadurch gekennzeichnet, dass** das Fiskaldatenspeichermodul (100) Peripheriegeräte (300), insbesondere mindestens eine Anzeigeeinheit und/oder mindestens eine Kassenschublade und/oder mindestens einen Scanner und/oder mindestens eine Waage, ansteuert.

12. Anordnung nach einem der vorherhergehenden Ansprüche,
**dadurch gekennzeichnet, dass** die Sensoreinheit ein Geflecht oder eine Folie aus elektrisch leitfähigem Material umfasst, wobei die Öffnungen des Geflechts vorzugsweise geringer als 1 mm, insbesondere zwischen 0,1 mm und 0,9 mm sind.

13. Anordnung nach einem der vorherhergehenden Ansprüche,
**dadurch gekennzeichnet, dass** eine Steuereinheit vorgesehen ist, die die Signale der Sensoreinheit derart auswertet, dass bei einer durch die Sensoreinheit detektierten Manipulation ein Fehlerzustand der Anordnung (10) ermittelt und eine Fehlermeldung erzeugt wird oder dass die Anordnung (10) bei einer durch die Sensoreinheit detektierten Manipulation außer Betrieb gesetzt wird.

14. Anordnung nach einem der vorhergehenden Ansprüche,
**dadurch gekennzeichnet, dass** das zweite Gehäuse (120) und/oder das erste Gehäuse (210) und/oder das dritte Gehäuse (220) wasser- und/oder staubdicht ist.

## Claims

1. Arrangement for the secure printing of fiscal data,
having a printing unit (200) arranged in a first housing (210),
having a fiscal data storage module (100) comprising a non-volatile memory,
wherein the printing unit (200) comprises a security module,
wherein the security module and the fiscal data storage module (100) are connected to one another via a secured data transmission link (250),
**characterized in that**
the fiscal data storage module (100) is arranged in a second housing (120), different from the first housing, which is secured against tampering and interference,
the second housing (120) comprises a sensor unit for detecting instances of tampering, and
the fiscal data storage module (100) comprises an interface via which data can be exchanged with a cash register (500).

2. Arrangement according to Claim 1, **characterized in that** the security module is arranged in a third housing (220) which is secured against tampering and interference and preferably arranged in the first housing (210).

3. Arrangement according to either of the preceding claims, **characterized in that** data are transmitted securely between the fiscal data storage module (100) and the security module via the data transmission link (250), wherein the secure data transmission takes place, in particular, using unidirectional software key management, in particular based on HTTPS, SSL or TLS.

4. Arrangement according to one of the preceding claims, **characterized in that** the printing unit (200) can be actuated only by means of the data transmission link (250) and **in that** the printing data can be transmitted to the printing unit (200) only via the data transmission link (250).

5. Arrangement according to one of the preceding claims, **characterized in that** the security module transmits data to the fiscal data storage module (100) via the data transmission link (250), wherein said data from the printing unit (200) are used to confirm that all of the printing data from the printing unit (200) have been processed correctly.

6. Arrangement according to one of the preceding claims, **characterized in that** screened image data or printing data are transmitted from the security module to the fiscal data storage unit (100) in a page description language, in particular PCL or Postscript.

7. Arrangement according to one of the preceding claims, **characterized in that** the secured data transmission link (250) is effected via a signal and/or network cable (260), wherein the signal cable is preferably a cable for serial data transmission, such as a USB cable or an RS-232 or RS-485 cable.

8. Arrangement according to one of Claims 1 to 6, **characterized in that** the secured data transmission link (250) is effected via a wireless data transmission, in particular via WLAN, UMTS or GSM.

9. Arrangement according to one of the preceding claims, **characterized in that** the security module, the fiscal data storage module (100) and the data transmission link (250) form a secure fiscal storage unit.

10. Arrangement according to Claim 9, **characterized in that** the fiscal storage unit transmits stored fiscal data securely to third parties, in particular to fiscal authorities, wherein the transmission of the fiscal data is effected, in particular, wirelessly via a radio network, in particular via WLAN, UMTS or GSM.

11. Arrangement according to one of the preceding claims, **characterized in that** the fiscal data storage module (100) actuates peripheral devices (300), in particular at least one display unit and/or at least one cash drawer and/or at least one scanner and/or at least one set of scales.

12. Arrangement according to one of the preceding claims, **characterized in that** the sensor unit comprises a mesh or a film made of electrically conductive material, wherein the openings of the mesh are preferably smaller than 1 mm, in particular between 0.1 mm and 0.9 mm.

13. Arrangement according to one of the preceding claims, **characterized in that** a control unit is provided, which evaluates the signals of the sensor unit in such a way that, when an instance of tampering is detected by the sensor unit, a fault state of the arrangement (10) is identified and a fault message is generated or **in that** the arrangement (10) is shut down when an instance of tampering is detected by the sensor unit.

14. Arrangement according to one of the preceding claims, **characterized in that** the second housing (120) and/or the first housing (210) and/or the third housing (220) is waterproof and/or dustproof.

## Revendications

1. Ensemble destiné à l'impression sécurisée de données fiscales, ledit ensemble comprenant
une unité d'impression (200) qui est disposée dans un premier boîtier (210),
un module de mémorisation de données fiscales (100) comprenant une mémoire non volatile,
l'unité d'impression (200) comprenant un module de sécurité,
le module de sécurité et le module de mémorisation de données fiscales (100) étant reliés l'un à l'autre par le biais d'une liaison de transmission de données sécurisée (250),
**caractérisé en ce que**
le module de mémorisation de données fiscales (100) est disposé dans un deuxième boîtier (120) qui est différent du premier boîtier et qui est protégé contre toute manipulation et intervention,
le deuxième boîtier (120) comprend une unité formant capteur destinée à détecter une manipulation, et
le module de mémorisation de données fiscales (100) comprend une interface par le biais de laquelle des données peuvent être échangées avec une caisse enregistreuse (500).

2. Ensemble selon la revendication 1, **caractérisé en ce que** le module de sécurité est disposé dans un troisième boîtier (220) qui est sécurisé contre toute manipulation et intervention et qui est de préférence disposé dans le premier boîtier (210).

3. Ensemble selon l'une des revendications précédentes, **caractérisé en ce que** des données sont transmises de manière sécurisée entre le module de mémorisation de données fiscales (100) et le module de sécurité par le biais de la liaison de transmission de données (250), la transmission de données sécurisée étant effectuée notamment à l'aide d'une gestion de clés logicielles unidirectionnelle, notamment sur la base de HTTPS, SSL ou TLS.

4. Ensemble selon l'une des revendications précédentes, **caractérisé en ce que** l'unité d'impression (200) ne peut être commandée que par le biais de la liaison de transmission de données (250) et **en ce que** les données d'impression ne peuvent être transmises à l'unité d'impression (200) que par le biais de la liaison de transmission de données (250).

5. Ensemble selon l'une des revendications précédentes, **caractérisé en ce que** le module de sécurité transmet des données au module de mémorisation de données fiscales (100) par le biais de la liaison de transmission de données (250), l'unité d'impression (200) confirmant par ces données que toutes les données d'impression ont été traitées correctement par l'unité d'impression (200).

6. Ensemble selon l'une des revendications précédentes, **caractérisé en ce que** des données d'images ou données d'impression tramées sont transmises du module de sécurité à l'unité de mémorisation de données fiscales (100) dans un langage de description de page, notamment PCL ou Postscript.

7. Ensemble selon l'une des revendications précédentes, **caractérisé en ce que** la liaison de transmission de données sécurisée (250) est effectuée par le biais d'un câble de signal et/ou d'un câble de réseau (260), le câble de signal étant de préférence un câble destiné à la transmission de données en série, tel qu'un câble USB ou un câble RS-232 ou RS-485.

8. Ensemble selon les revendications 1 à 6, **caractérisé en ce que** la liaison de transmission de données sécurisée (250) est effectuée par une transmission de données sans fil, notamment WLAN, UMTS ou GSM.

9. Ensemble selon l'une des revendications précédentes, **caractérisé en ce que** le module de sécurité, le module de mémorisation de données fiscales (100) et la liaison de transmission de données (250) forment une unité de mémorisation fiscale sécurisée.

10. Ensemble selon la revendication 9, **caractérisé en ce que** l'unité de mémorisation fiscale transmet de manière sécurisée des données fiscales mémorisées à des tiers, en particulier à des autorités financières, la transmission des données fiscales étant effectuée notamment sans fil par le biais d'un réseau radio, en particulier WLAN, UMTS ou GSM.

11. Ensemble selon l'une des revendications précédentes, **caractérisé en ce que** le module de mémorisation de données fiscales (100) commande des périphériques (300), notamment au moins une unité d'affichage et/ou au moins un tiroir-caisse et/ou au moins un scanner et/ou au moins une balance.

12. Ensemble selon l'une des revendications précédentes, **caractérisé en ce que** l'unité formant capteur comprend une tresse ou un film en matière électriquement conductrice, les ouvertures de la tresse étant de préférence inférieures à 1 mm, notamment comprises entre 0,1 mm et 0,9 mm.

13. Ensemble selon l'une des revendications précédentes, **caractérisé en ce qu'**une unité de commande est prévue qui évalue les signaux de l'unité formant capteur de telle sorte que, en cas de manipulation détectée par l'unité formant capteur, un état d'erreur de l'ensemble (10) est déterminé et un message d'erreur est généré ou que l'ensemble (10) est mis hors fonctionnement en cas de manipulation détectée par l'unité formant capteur.

14. Ensemble selon l'une des revendications précédentes, **caractérisé en ce que** le deuxième boîtier (120) et/ou le premier boîtier (210) et/ou le troisième boîtier (220) sont étanches à l'eau et/ou à la poussière.
